Europäisches Patentamt

European Patent Office

Office européen des brevets

(19)

(11) EP 0 772 332 A2

(12) **EUROPEAN PATENT APPLICATION**

(43) Date of publication:
07.05.1997 Bulletin 1997/19

(51) Int Cl.6: **H04L 27/26**, H04L 5/06

(21) Application number: 96307964.5

(22) Date of filing: 04.11.1996

(84) Designated Contracting States:
BE DE FR GB IT

(30) Priority: 02.11.1995 GB 9522479
04.12.1995 GB 9524777

(71) Applicant: BRITISH BROADCASTING
CORPORATION
London W1A 1AA (GB)

(72) Inventors:
• Stott, Jonathan Highton,
c/o British Broadc. Corp.
Surrey, KT20 6NP (GB)

• Clarke, Christopher K P,
c/o British Broadc. Corp.
Surrey, KT20 6NP (GB)
• Robinson, Adrian Paul, c/o British Broadc. Corp.
Surrey, KT20 6NP (GB)

(74) Representative: Abnett, Richard Charles
REDDIE & GROSE
16 Theobalds Road
London WC1X 8PL (GB)

(54) **Synchronisation of OFDM signals**

(57) Information is extracted from an OFDM signal, namely a signal which comprises a succession of symbol periods $T_T$ each consisting of an active symbol period $T_S$ and a guard interval $T_G$. To achieve this an input signal Y is received, and a signal X is provided which is delayed by a delay (10) having a time period equal to the active symbol period $T_S$. The complex product XY* of the input and delayed signals is formed by a full four-component complex multiplier (12) to provide a succession of pulses, one for each symbol period. The complex product signal is filtered using a filter (42; Fig. 4,5 or 6) based on filter elements which provide a delay equal to the total symbol period $T_T$. Symbol timing synchronization information is derived from the filtered complex product signal in a phase-locked loop (44). The argument (phase) of the signal in the pulses is detected by an angle-forming circuit (70;82). The frequency of a local oscillator (78) is controlled in dependence upon the argument of the signal in the pulses. To reduce continuous wave (CW) interference, any constant complex component of the signal XY* is removed, such as by using an integrate-and-dump circuit (80), or by extracting the complex mean by low-pass filtering the XY* signal and subtracting the mean from the XY* signal itself.

Fig. 11

## Description

## 1 BACKGROUND OF THE INVENTION

1.1 Introduction

This invention relates to the synchronization of orthogonal frequency division multiplex (OFDM) signals, such as proposed for use in digital audio broadcasting (DAB) and digital television (TV).

All digital modulation systems require the receiver to obtain some kind of synchronization with the transmitted signal. OFDM systems (as used for DAB or digital TV) are no exception - indeed, they tend to have more things to synchronize, namely:

(a) time synchronization, comprising:

.   frame lock
.   symbol lock
.   fine timing (positioning of fast Fourier transform (FFT) window), and

(b) frequency synchronization, comprising:

.   coarse automatic frequency control (AFC), namely centring the signal in the IF passband
.   sampling-frequency synchronization (makes pitch of carriers correct)
.   fine AFC offset (aligning the grid of reference carriers exactly upon the received ones)
.   integer carrier offset (ensuring that the corresponding carriers line up).

Frame lock is not needed for all systems, but is required if there are special symbols (such as the null, CAZAC and TPS symbols, well-known in the OFDM field) which must be distinguished from those carrying "regular" data. The processes of fine timing and synchronizing the sampling frequency can be related, since a sampling-frequency error will cause a steady drift of fine timing. Fine AFC can also be related to the process of common phase-error correction (if implemented), since an AFC error will cause steady drift of common phase-error.

A commonly-used procedure is to acquire frame lock by detecting null symbols in the time-domain waveform before the FFT has been performed; then to process the frequency-domain information derived from some kind of reference symbol to obtain the control signals for all the other processes. Thus most of the processing is done after the FFT. While this has been shown to work in many implementations, there remains a clear attraction for a process which works mostly or entirely from the time-domain signal before the FFT.

Specific proposals for synchronization of OFDM receiving apparatus are described for example in European Patent Applications EP-A-0 653 858 and 0 608 024, and International Patent Applications WO95/07581, WO95/05042 and WO95/03656. In particular, EP-A-0 653 858 describes an OFDM synchronization demodulation circuit which demodulates along in-phase and orthogonal axes, and delays the in-phase and orthogonal signals by the symbol period. It then correlates the delayed and undelayed in-phase and orthogonal signals using a multiplicative correlation process. The timing of the guard interval is detected therefrom by a guard timing detection circuit, and the OFDM signal is demodulated by reference to the resultant timing signal.

1.2 Basic Properties of the OFDM Signal

The OFDM signal comprises a large number of carriers, evenly spaced in frequency, each carrying data according to some modulation scheme. Ignoring special symbols, and any correlation in the data introduced by error-correction coding, the complex amplitudes of the carriers are independent and randomly chosen from the appropriate constellation of permitted values, e.g. QPSK, 16-QAM, 64-QAM. The resulting time-domain signal appears in many ways random and noise-like. Its amplitude distribution is almost Gaussian (save that it does not extend to infinity at its 'tails'). Its spectrum (if averaged over several symbols) is nearly flat, or rather, it would be if there was no guard interval.

The addition of the guard interval is the key to the usefulness of COFDM in multipath environments. Each symbol is extended by a period $T_G$ (the guard interval) which precedes the "useful" or "active" symbol period $T_S$, so that the whole symbol period $T_T$, in total. $T_S$ is the reciprocal of the carrier spacing $f_S$, and is the duration of the time domain signal produced or analysed by the FFT in the transmitter and receiver respectively.

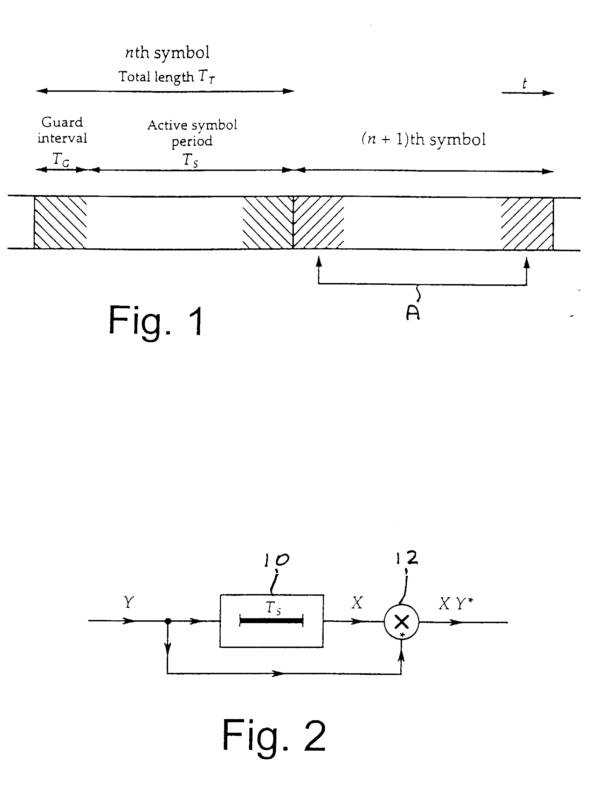

Each carrier is continuous over the boundary between guard interval and active part of the same symbol, keeping the same amplitude and phase. If the signal at complex baseband is considered, with all the carriers not only spaced $f_S$, but also equal to multiples of $f_S$, then the signal in the guard interval is effectively a copy of the segment of the signal occupying the last $T_G$'s worth of the active part, as shown in Figure 1. It follows that the signal has the same value at any two instants which are separated by $T_S$ but lie within the same symbol.

The present invention has as its object to provide an improved or at least alternative method for the processing of OFDM signals such as to facilitate the correct demodulation of the signals.

## 1.3 SUMMARY OF THE INVENTION

The present invention in its various aspects is defined in the independent claims below, to which reference should now be made. Advantageous features of the invention will be described in more detail by way of example with reference to the drawings.

Preferred embodiments of the invention are described in more detail below in which information is extracted from an OFDM signal, namely a signal which comprises a succession of symbol periods $T_T$ each consisting of an active symbol period $T_S$ and a guard interval $T_G$. To achieve this an input signal Y is received, and a signal X is provided which is delayed by a delay having a time period equal to the active symbol period $T_S$. The complex product XY* of the input and delayed signals is formed by a full four-component complex multiplier to provide a succession of pulses, one for each symbol period. The complex product signal is filtered using a filter based on filter elements which provide a delay equal to the total symbol period $T_T$. Symbol timing synchronization information is derived from the filtered complex product signal in a phase-locked loop. The argument (phase) of the signal in the pulses is detected by an angle-forming circuit. The frequency of a local oscillator is controlled in dependence upon the argument of the signal in the pulses. To reduce continuous wave (CW) interference, any constant complex component of the signal XY* is removed, such as by using an integrate-and-dump circuit, or by extracting the complex mean by low-pass filtering the XY* signal and subtracting the mean from the XY* signal itself.

## 1.4 BRIEF DESCRIPTION OF THE DRAWINGS

The invention will now be described in more detail, be way of example, with reference to the accompanying drawings, in which:

Figure 1 is a diagram showing how each symbol comprises an active symbol and a guard interval, and illustrates the relationship between them;

Figure 2 illustrates how the product signal XY* is formed;

Figure 3 illustrates how the properties of the product signal XY* vary with time;

Figure 4 illustrates conceptually a filter of finite impulse response (FIR) form, which exploits the periodicity of the signal XY*;

Figure 5 shows a circuit which is equivalent to that of Figure 4, when the tap weights are the same, but which uses fewer components;

Figure 6 shows a recursive infinite response (IIR) filter which exploits the periodicity of the signal XY*;

Figure 7 illustrates the result of passing the signal XY* through a 'pseudo-matched' filter, incorporating a running average over the period $T_G$, to produce triangular pulses;

Figure 8 shown the formation of the product signal XY* when there are two paths, only the underlying signal being shown for clarity;

Figure 9 illustrates a circuit for phase-locking the sampling frequency, in a configuration incorporating a product filter;

Figure 10 illustrates a circuit for phase-locking the sampling frequency, without using a product filter;

Figure 11 illustrates a circuit similar to Figure 9 to which automatic frequency control (AFC) has been added; and

Figure 12 illustrates a circuit similar to Figure 10 to which automatic frequency control (AFC) has been added.

## 2 DETAILED DESCRIPTION OF THE PREFERRED EMBODIMENTS

2.1 Basis of the Method

First the basis for the method of our invention will be described. From Figure 1 it can be understood that we have appreciated that: "the signal has the same value at any two instants which are separated by $T_S$ but lie within the same symbol". As a practical matter a significant extension is necessary to account for possible frequency offsets (e.g. caused by AFC error). But let us consider the form the signal takes in general.

From Figure 1 it is seen that the segment of the signal in the guard interval at the beginning of the symbol period, shown hatched, is identical to the last part of the active symbol, similarly hatched. Thus at instants A separated by an interval equal to the active symbol period $T_S$ the signal has the same value, provided that both instants lie within the same symbol.

When the signal is generated at complex baseband, one can assume, without any loss of generality, that the zeroth carrier has zero frequency. The generated signal s(t) during the mth symbol can therefore be described, using conventional terminology, by:

$$s(t) = \sum_{k=k_{min}}^{k=k_{max}} S_{k,m}\, e^{jk\omega_s(t - mT_T)}$$

where:

$$(mT_T - T_G) < t < (mT_T + T_S)$$

while if it is modulated (shifted) in frequency it can be described as:

$$s'(t) = \sum_{k=k_{min}}^{k=k_{max}} S_{k,m}\, e^{j\{\omega_0 t - k\omega_s(t - mT_T)\}}$$

where:

$$(mT_T - T_G) < t < (mT_T + T_S)$$

where $\omega_0$ is the (now arbitrarily shifted) frequency of the zeroth carrier. It can be used in various ways, either to consider a signal shifted to IF or RF, or to consider the complex baseband signal at the receiver, in which case $\omega_0$ is in effect the receiver's AFC error.

It can now be seen that it is true to say that s(t) has the same value at any two instants which are separated by $T_S$ but lie within the same symbol. It can also be seen that this is not the case with s'(t) because it is s(t) multiplied by the complex exponential term $e^{j\omega_0 t}$. Thus for two instants, separated by $T_S$ but taken within the same symbol:

$$s'(t + T_S) = e^{j\omega_0 T_S}\, s'(t) = e^{j2\pi\omega_0/\omega_s}\, s'(t)$$

The term $e^{j\omega_0 T_S}$ at first appears to be a major inconvenience, but in fact it permits extraction of AFC information as well as time synchronization. It means that the phase of the pulse is constant and is proportional to the frequency error.

Thus a relationship exists between the signal value at instants separated by $T_S$, and a synchronization method based on correlating the signal with a delayed version of itself can be employed to effect either timing synchronization or frequency synchronization.

2.2 Single-path Reception

Suppose the sampled complex baseband signal is delayed by $T_S$ and the two signals are multiplied. In fact, the complex conjugate of one is taken first, as complex quantities are being correlated. When the two samples which are being multiplied correspond to instants which lie in the same symbol they will be related as has just been described. Figure 2 illustrates the arrangement, including a delay device 10 having a delay period equal to the active symbol period, and a multiplier 12 receiving the delayed and undelayed signals. As shown, the complex conjugate is taken of the undelayed signal, this being indicated by an asterisk (*). As apparent below, the multiplier 12 is a full (four-component) complex multiplier.

In general X can be described as a complex random variable, having zero mean, and whose real and imaginary parts each have variance $\sigma_X^2/2$. The total signal 'power' (strictly, the energy per complex sample in a $1\Omega$ system) is thus $\sigma_X^2$.

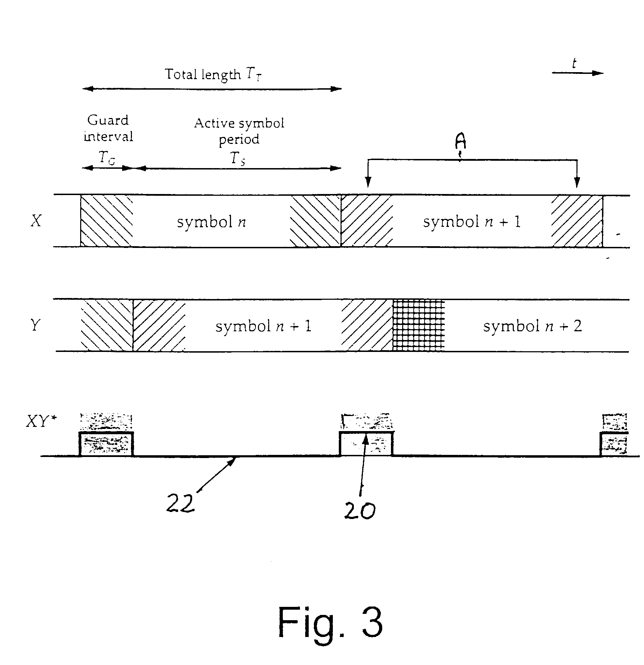

For those instants, as at 20 on Figure 3, where the two samples X and Y belong to the same symbol then $Y = Xe^{j\omega_0 T_S}$ so that the product is:

$$XY^* = XX^* e^{-j\omega_0 T_S}$$

while the mean of this noise-like signal is

$$\overline{XY^*} = \overline{XX^*} e^{-j\omega_0 T_S} = \sigma_X^2 e^{-j\omega_0 T_S}.$$

For those instants, as at 22, where the two samples X and Y do not belong to the same sample then, as X and Y are independent zero-mean random variables, the product $XY^*$ has zero mean.

The signal $XY^*$ can therefore be illustrated in schematic form as shown in Figure 3. (It is assumed that the complex product is $X^*$, though it could equally be $X^*Y$.)

Figure 3 shows that the output $XY^*$ of the complex multiplier of Figure 2 is noisy but has an underlying pulse structure which would be revealed provided some kind of averaging - i.e. a filter - is used. Note that the filter must handle a complex signal; this is not as major an added complication as might be expected, as is seen below. In Figure 3, it should be noted that the product $XY^*$ is actually complex, so its representation as a single waveform is schematic only. The shading on the figure illustrates the noise-like nature of the signal, with two distinct types of behaviour at different times, while the thick line indicates the mean value of the signal.

The underlying pulse structure is thus periodic. It occurs once per symbol (except, of course, during a null symbol). So timing and sampling-frequency information can be derived from it, for example by an appropriate form of phase-locked loop.

During each $T_G$-wide 'pulse' the argument of the complex signal is the angle $-\omega_O T_S$ from which the fine-AFC error can be obtained. Since any additional multiples of $2\pi$ cannot be distinguished, it follows that such AFC can only lock the frequency offset to the nearest integer number of carrier spacings $f_S$. The subsequent demodulation of the signal using the FFT will therefore have an uncertainty as to which carrier's output appears on which FFT outlet. This must be resolved by other means, such as recognising what happens to a (known) reference symbol or monitoring the activity of the error-corrector decoder.

### 2.3 Possible Forms of Filter

Filtering the waveform of Figure 3 is desirable if the underlying pulse is to be made visible (e.g. to a scope probe). It will be seen, however, in a later section, that explicit filtering may not be strictly necessary; some suitable control loops may provide a 'hidden' filter characteristic by their very operation.

Two general strategies may be distinguished, although they could also be used together. One exploits the periodicity, and thus performs the averaging between successive occurrences of the pulse; this approach therefore preserves the shape of the pulse. The other averages between nearby samples in the same pulse; this approach inevitably distorts the shape of the pulse.

The filters to be described operate by filtering the complex product signal with a filter based on filter elements having a delay equal to the total symbol period $T_T$.

### 2.3.1 Filters exploiting the periodicity of the signal

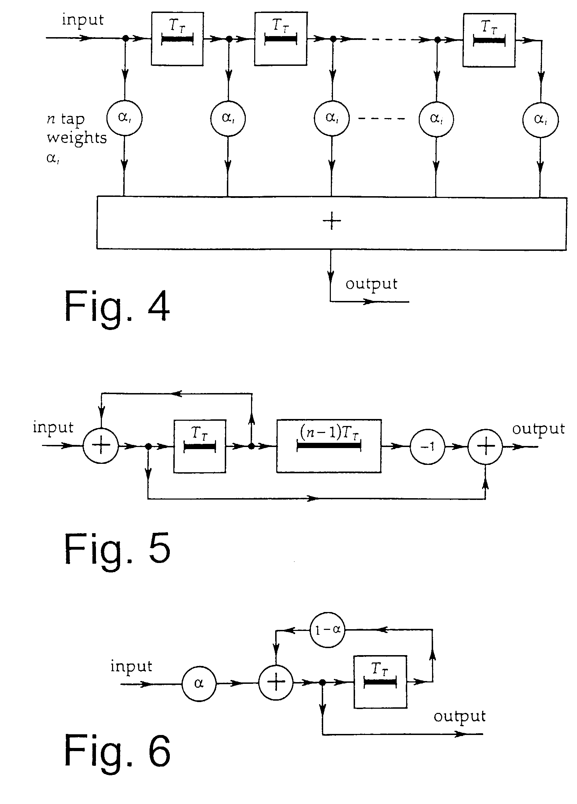

The signal periodicity could be exploited by a finite impulse response (FIR) filter having taps at intervals spaced by $T_T$, as shown in Figure 4. In considering Figure 4, note that all the signals are complex, although the tap weights are real. The Figure shows a transversal filter construction, with $(n - 1)$ delay elements, giving a total delay of $(n - 1) T_T$. There are $n$ tap weights $\alpha_i$ applied to $n$ coefficient multipliers, the outputs of which are added together to provide the circuit output.

For any significant degree of averaging to take place an FIR filter must have a large number of taps, generally involving many multipliers and hence, with this structure, a large amount of delay. If all the tap weights are the same, then no multipliers are needed (or, at most, one at the output to normalise the gain) and the circuit is in effect a kind of bandpass version of a "running-average" filter. This can be simplified to the structure of Figure 5, which appears recursive but is nevertheless FIR in behaviour. It saves on adders but still needs the delay elements.

Finally, the use of both multipliers and delay elements can be minimised if a recursive IRR (infinite impulse response) filter is used, of which Figure 6 is a simple example.

### 2.3.2. Shorter filters which do not exploit the periodicity of the signal

All the filters described in the previous section preserve the pulse shape by only performing averaging between corresponding points in successive symbols. As has been seen this requires substantial amounts of delay. Even with the simplest IIR, $T_T$'s worth of delay is still required. To put this into perspective, for an 8K FFT (fast Fourier transform), together with a 25% guard interval, the delay must store 8192 x 5/4 = 10240 complex samples. To reduce this storage requirement, a filter can be chosen which merely averages nearby samples. The same general structures as Figures 4 to 6 can be used, but the delays shown as $T_T$ are replaced by single-complex-sample delays. The pulse shape is now distorted by being convolved with the added filter's impulse response.

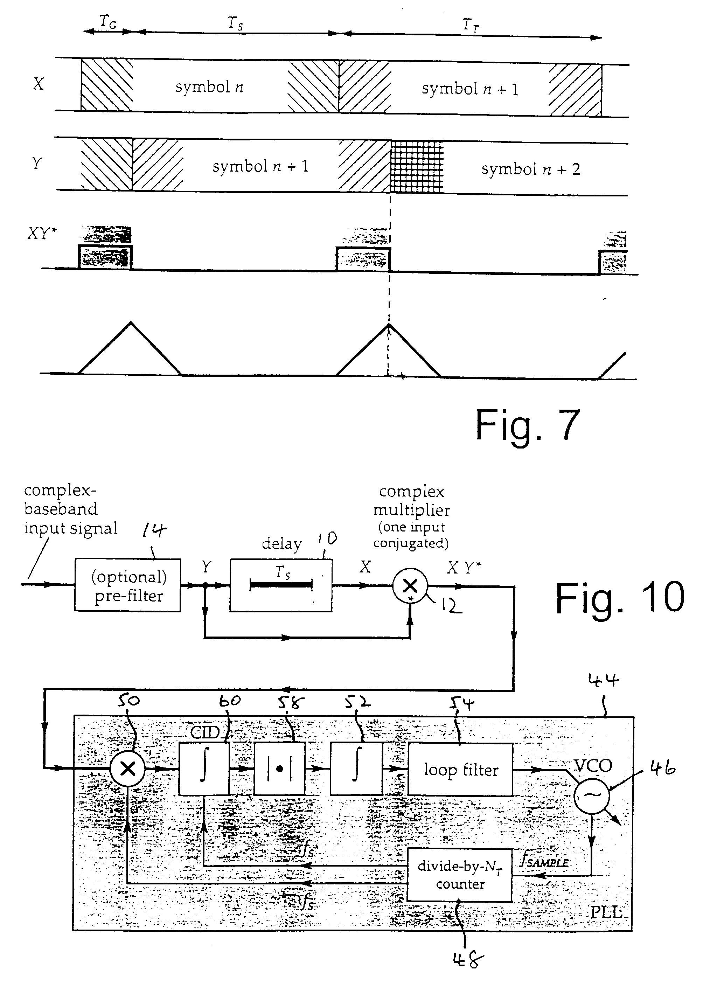

One filter of interest is the 'running-average' filter (also described as a 'top hat' filter on account of the appearance of its impulse response) whose behaviour is a rectangular pulse of duration $T_G$. If the noise-like behaviour of XY* were like additive thermal noise, then this would be the classical matched filter for the pulse in question. Since the 'noise' in this case is neither Gaussian nor stationary no special 'matched' properties can be claimed for this choice of filter, but it nevertheless appears to be a useful choice. After passing the XY* signal through it, the resulting pulse shape will be triangular, of total width $2T_G$, as seen in Figure 7. Referring to this figure, the output of the pseudo-matched filter, the impulse response of which is a rectangular pulse of width equal to the guard interval, is a train of triangular pulses, as shown in the last line of the figure. The height of the peak of the triangle is proportional to $\sigma_X^2 e^{-j\omega_0 Ts}$. It occurs at the boundary between symbols in the Y stream.

If this triangular pulse is sampled at its peak, the value will be the average of all the samples contained in the original notional $T_G$-wide rectangular pulse. Since the number of samples is substantial (e.g. taking the same example of an 8K FFT, it is 8192/4 = 2048 complex samples) this should provide a good 'quiet' estimate of $\overline{XY^*} = \sigma_X^2 e^{-j\omega_0 Ts}$

The triangular pulse is no less useful than a rectangular one to drive the PLL to derive timing and sampling frequency. If a multiplicative phase detector is used with a square-wave reference signal, as is discussed in Section 3 below, then the detector characteristic will be linear with rectangular pulses and non-linear with triangular ones, but this should not present special difficulties.

The simplest implementation of this $T_G$-wide running-average filter is the same as Figure 5, but with the first delay of $T_T$ replaced by a single complex-sample delay, and the second delay, of $(n - 1)T_T$, replaced by one of ($T_G$ less one complex sample). The total storage requirement of the filter is thus the equivalent of a $T_G$ delay.

### 2.3.3. A simple way to implement filters for complex signals

It has been noted that the filters discussed all accept the complex signal XY* and deliver a complex output. Since the filters all have real coefficients, the requirement is that the real and imaginary parts of the input signal should pass through a pair of identical (real) filters who outputs are then the real and imaginary parts respectively of the complex filtering operation. It thus appears that the complex filtering operation has twice the complexity, needing twice the components, of the real filter.

However, a significant saving can be made if the complex signal is conveyed as a single stream of samples in which the real and imaginary parts are interleaved, two successive samples (at twice the rate) conveying the real and imaginary parts of the corresponding complex input sample. If this interleaved stream is passed through a single filter whose delay elements are of the same time duration as those of the corresponding separate filters (as of the previous paragraph) the desired complex filtering operation is performed directly. Since the sample rate of the interleaved stream is twice that of the separate streams, each delay element contains twice the number of flip-flop stages as the corresponding element in one of the separate filters.

In summary, the interleaved and twin-separate filter approaches contain the same total number of storage elements, but the interleaved approach requires less interconnection and one-half the number of multipliers and adders (although they must run at twice the speed) . For the sample rates involved for DAB or digital TV the interleaved approach is thus feasible and attractive.

### 2.4 Multipath Reception

The Figures described so far have shown what would happen when the signal is received via a single path. With a modulation system such as a COFDM which in itself is able to cope well with multipath reception, it is vital that the synchronization performs appropriately. Thus how the proposal will behave in multipath reception must be considered.

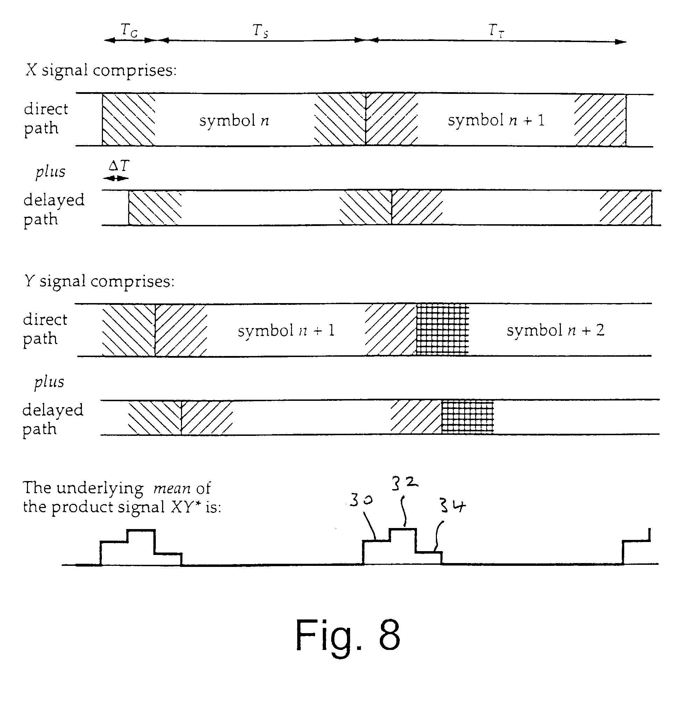

Consider a two-path scenario, where the two paths arrive with a time difference $\Delta T$. It is assumed that the two paths suffer no relative Doppler shift. What happens to the underlying rectangular 'pulse' which describes the mean value of the signal XY*? This is illustrated in Figure 8 in which the second path is shown as having a slightly smaller amplitude so that the pattern is more easily seen. Suppose the complex amplitude of the second path, relative to the first, is *a*.

The 'pulse' now has three sections of different heights.

The first section 30 results from the correlation between the main-path component only of the X and Y* and so its height is proportional to $\sigma_X^2 e^{-j\omega_0 Ts}$ as before.

In the second section 32 of the 'pulse' both the main and the delayed paths contribute to the correlation. Provided samples of the signal are independent (except of course when separated by $T_S$ within the same symbol), then it follows that the height of this second section is proportional to $(1 + aa^*)\sigma_X^2 e^{-j\omega_0 Ts}$

Finally, in the last section 34, only the delay paths contribute to the correlation. Its height is therefore proportional to $aa^*\sigma_X^2 e^{-j\omega_0 Ts}$.

One can generalise from this to the multipath case. Let the channel impulse response be h(t) and define a channel power impulse response p(t)=h(t)h*(t). Let g(t) be a rectangular (`top-hat') pulse of unit height and of width $T_G$. It can be seen that each 'pulse' in the product signal XY* takes the form of $e^{-j\omega_0 Ts} p(t) \otimes g(t)$ , plus noise-like terms of zero mean.

If this signal is passed through the 'periodicity-exploiting' filters of Figures 4 to 6, the pulse shape is unchanged (their impulse responses are themselves composed of impulses spaced by multiples of $T_T$).

On the other hand, the 'pseudo-matched' filter, whose use is illustrated in Figure 7, itself has an impulse response equal to g(t), so that the pulse shape resulting if this filter is used takes the form:

$$e^{-j\omega_0 T_S} p(t) \otimes g(t) \otimes g(t) = e^{-j\omega_0 T_S} p(t) \otimes i(t)$$

where I(t) is the triangular pulse illustrated in Figure 7.

2.5 Coping with Sampling-frequency Error

In the description so far it has been assumed that in forming XY* one looks back over a period $T_S$ to obtain the signal X. In practice, the delay used is a fixed number of storage elements, so the delay corresponds to a fixed number of sample periods. In other words, the exact value of the delay used depends on the sampling frequency, which is one of the two frequencies that we seek to control. Typically, for digital TV, the period $T_S$ would correspond to 8192 complex samples. Given that a crystal-controlled VCO would typically be used to generate the sampling clock, it is unlikely that $T_S$ will be in error by more than one or two samples.

Nevertheless, being one or two samples adrift is going to reduce, if not destroy, any correlation between the signals X and Y. Technically, if the signal were truly random, at least during the active symbol period, and not band-limited, then its auto-correlation function would just contain three impulses:

$$\varphi_{xx}(\tau) \propto \delta(0) + \delta(T_S) + \delta(-T_S)$$

where the second and third impulse terms arise because of the cyclic continuation provided in the guard interval. This relationship only applies when the signal is observed within one symbol. In effect, if the delay is in error by $\Delta T_S$ what is measured is an approximation to $\varphi_{xx}(T_S + \Delta T_S)$ which, because of this relationship, has the same value as $\varphi_{xx}(\Delta T_S)$. Only some kind of short-term average is taken, the form of which is determined by the filter, rather than the infinite-duration average strictly implied in the definition of $\varphi_{xx}(\tau)$. Ideally of course $\varphi_{xx}(0)$ is obtained.

A solution, to make sure the measurements do not disappear when there is a small error in the sampling frequency, is to gently pre-filter the signal Y before delaying it and in turn performing the multiplication. This will spread out $\varphi_{xx}(\tau)$ sufficiently to ensure $\varphi_{xx}(\Delta T_S)$ does not vanish for reasonable small errors $\Delta T_S$ without spoiling the eventual pulse shape.

In practice this means using a simple (complex) running-average filter whose impulse response $h_{PRE}(t)$ is a 'top-hat' filter which is one or a few sample periods wide.

If the receiver's thermal noise is neglected, the pre-filter has just the same effect as if the channel and the pre-filter are cascaded. As far as modification of pulse shapes and correlation properties is concerned, $h_{PRE}(t)$ is simply convolved with the impulse response of the channel. It follows that many practical channels will themselves already have spread out the auto-correlation function $\varphi_{xx}(\tau)$ sufficiently that this pre-filter may not prove to be necessary.

2.6 An alternative to the calculation of XY*.

The above has assumed that XY* is calculated as a basis for the method. An alternative to this is as follows.

Let X be taken in Cartesian form, and each Cartesian component be replaced by its sign, multiplied by unity, and the result denoted $X_Q$. Thus $X_Q$ has four possible values: $1 + j$, $1 - j$, $-1 + j$, and $-1 - j$. Another way to describe this conversion is to say that whichever of the four possible values of $X_Q$ is the shortest distance away from X in the Argand diagram is taken.

Then an alternative to the calculation of XY* is to form:

$$X_Q Y^* + X Y_Q^*$$

where $Y_Q$ is formed from Y in the same way as $X_Q$ is formed from X. It should be noted that $(Y_Q)^* = (Y^*)_Q$.

Use of this formulation instead of XY* in the synchronization algorithm simplifies the implementation. One of the inputs to each multiplication is now only one bit wide, so that the multiplications become controlled negations (inversions).

## 3 THE SAMPLING-FREQUENCY/SYMBOL-TIMING CONTROL LOOP

So far ways to extract synchronization information from the time-domain OFDM signal have been considered. In this Section the application of this information to controlling the sampling frequency and, with it, the symbol timing is discussed. The following Section will consider the AFC loop controlling frequency offsets.

### 3.1 A Configuration when the Product XY* is Filtered

Section 2.3 above described various configuration of filter which may be applied to the complex signal XY*. To avoid confusion with the pre-filter of Section 2.5, this filter applied to XY* will henceforth be called the *product filter.*

At the output of the product filter there is a complex waveform which has periodic pulses. The shape of each of these pulses is the convolution of all of:

- the channel *power* impulse response $p(t) = h(t)h^*(t)$
- the pre-filter *power* impulse response $h_{PRE}(t)h^*_{PRE}(t)$
- a 'top-hat' pulse of duration $T_G$, say $g(t)$
- the product-filter (voltage) impulse response $h_{PROD}(t)$

The convolution is a real quantity (provided the product-filter impulse is real, as with the examples of Section 2.3, and is the *magnitude* of the complex signal at the output of the product filter. The *argument* of this complex signal is arbitrary between pulses but settles to the value of $-\omega_0 T_s$ during each pulse.

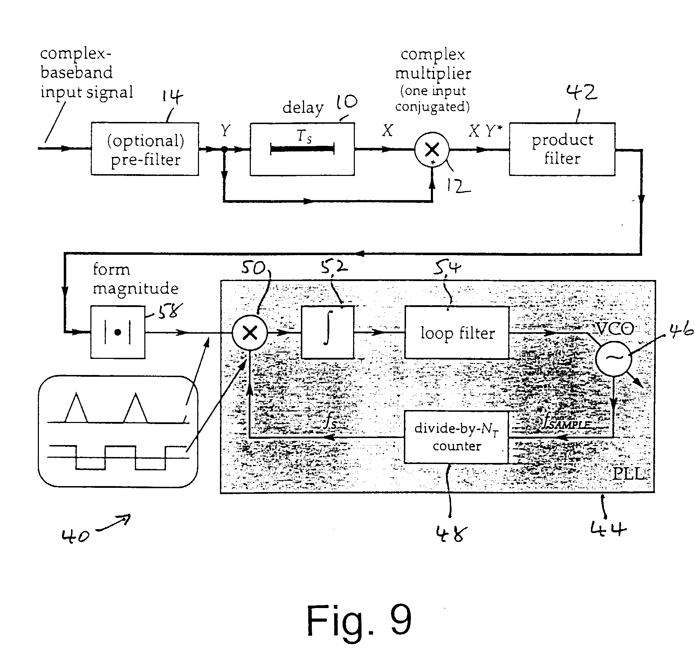

A circuit configuration 40 which can be used to exploit the pulses to control the sampling frequency and symbol timing is shown in Figure 9. On this Figure, thick lines denote paths carrying complex signals. The circuit includes the delay 10 and complex multiplier of Figure 2, as well as an optional pre-filter 14 based on Section 2.5 above. The magnitude of the output of the product filter 42 is fed through a circuit 58 for forming the magnitude or modulus of the signal, into a phase-locked loop (PLL) 44. The loop comprises a voltage-controlled oscillator (VCO) 46 generating the sample-rate clock, which is divided down by a counter 48 to produce a square wave of period $T_T$ and having zero mean and 1:1 mark:space ratio, and which drives a multiplicative phase detector 50. The output of this drives an integrator 52 and loop filter 54 whose output then controls the oscillator 46.

In this case, the input signal from a magnitude detector 58 can be converted to analogue and the multiplier, integrator and loop filter be implemented in analogue form. Alternatively, one or more of these components can be implemented digitally, with the digital-to-analogue converter placed later in the chain as appropriate.

When receiving a single direct path, the loop will lock so the square-wave transition lies in the middle of the symmetrical pulse (rectangular if one of the filters of Section 2.3.1 is used, triangular with a $T_G$-wide 'top-hat' product filter, trapezoidal with a less-than-$T_G$-wide 'top-hat'). Multipath reception is considered in Section 3.4 below.

### 3.2 A Configuration without a Product Filter

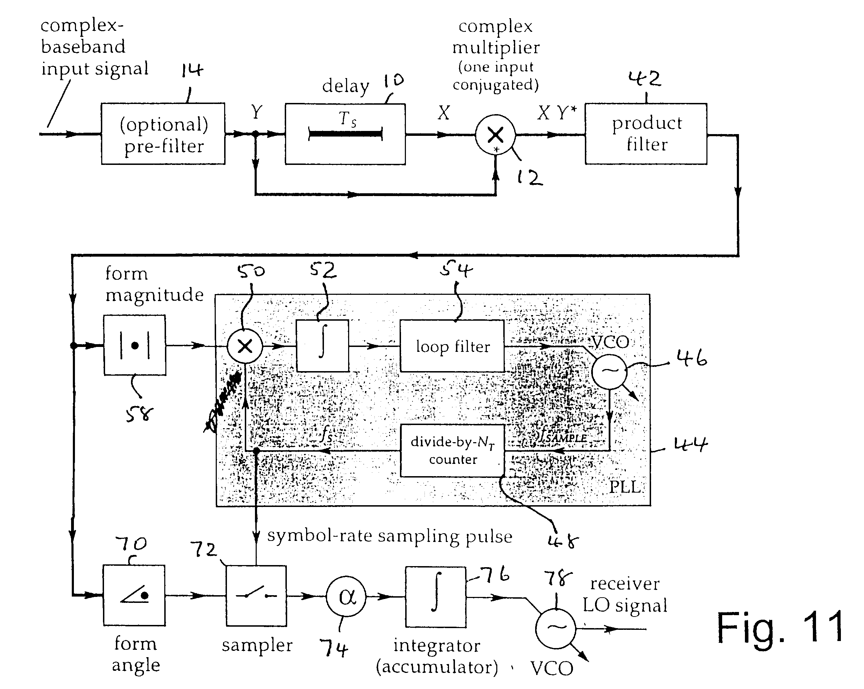

Since the phase-locked loop itself performs a filtering action, having a loop bandwidth depending on its gain, it might be conjectured that having the product filter as well is redundant. The purpose of the loop filter 54 shown in Figure 9 is to tailor the loop dynamics and ensure stability. Indeed, a configuration is proposed in Figure 10 in which the product filter is omitted. However, there is a complication.

The circuit of Figure 9 takes the magnitude of the complex signal which is output by the product filter 42. If the filter performs a reasonable degree of averaging, this output might be expected to take a form like that indicated in Figure 7, where the averaging of the pulse produces a positive, triangular pulse, while between the pulses the original noise-like signal has been smoothed to its mean value of zero. In this situation, taking the magnitude makes a real signal suitable for the PLL 44 while preserving the essential features of the signal.

If the product filter is simply omitted and the magnitude detector left in the same place, handling the XY* product directly, the resulting real signal will be positive and noise-like throughout the period. The property of zero mean between pulses is lost.

The desired 'average the inter-pulse noise to zero' property can be regained if the PLL phase comparator is implemented as the cascade of a multiplier 50 and a complex integrate-and-dump circuit 60, as Figure 10 shows. The complex integrate-and-dump (CID) circuit 60 delivers one complex result per symbol.

The PLL phase comparator now handles complex signals and can most conveniently be implemented digitally. The complex integrate-and-dump circuit 60 is then basically a complex accumulator. It can take a very simple form, comprising one adder and two delay elements, compared with one adder and one delay element for a digital implementation of Figure 9, if the signal comprises interleaved samples of the real and imaginary parts. The CID is first cleared, then integrates the complex signal over one symbol period symmetrically disposed about the negative-going transition of the square-wave driving the multiplier. The CID thus ramps 'up' for half a symbol and then 'down' for the other half, the magnitude of the net difference being the 'phase' error which is then transferred into the integrator, once per symbol. Strictly, one should say that the CID includes a sample-and-hold at its output, unless the subsequent integrator is a digital accumulator whose input is in turn clocked once per symbol at the appropriate instant.

Other implementation achieving essentially similar results can readily be devised, e.g. two complex integrate-and-dumps, one operating over the first half-symbol, the other over the second half, and the magnitude of their outputs being subtracted once per symbol. This would avoid the need for the multiplier.

3.3 A Simplification Too Far?

In Section 3.2 it was noted that if the product filter of Figure 9 is simply omitted, leaving the magnitude detector in the same place, the resulting real signal will be positive and noise-like throughout the period and the property of zero mean between pulses will be lost. It is nevertheless possible that this arrangement might still work.

Referring back to Figure 7, the statistics of the XY* signal are very different during and between the 'pulses'. The difference exploited by all the previously-considered arrangements is that the magnitude or modulus $|\overline{XY^*}|$ of the mean $\overline{XY^*}$ is positive during the pulses and zero between them. If there is no product filter and the magnitude is taken before the PLL, the PLL has to deal with the real signal $|XY^*|$. This signal is always positive (or zero), so its mean $|\overline{XY^*}|$ (which is in effect what the PLL responds to) is also positive both during and between the pulses. However, it seems quite possible that it would still take different values during and between the pulses, so very probably the PLL would still lock. During the pulse:

$$|\overline{XY^*}| = |\overline{XY^*}|;$$

i.e. the mean of the magnitudes is equal to the magnitude of the mean, but the value of $|\overline{XY^*}|$ between pulses is less clear.

It should be noted that if the signal is handled as interleaved samples of the real and imaginary parts, the only saving resulting from this proposal is one delay element. Further, this negligible saving may well be accompanied by some loss of performance.

3.4 Timing Behaviour of these Configurations in the presence of Multipath Distortion

3.4.1. Single-path reception in more detail

The PLL, in the arrangements discussed so far, will lock so that the transition in the symbol-rate square wave lies in the middle of the 'pulses' (real or complex, according to configuration) fed to it. This ensures that the area multiplied (in the phase detector) by +1 equals the area multiplied by -1, so that the net effect of each pulse on the output of the integrator/accumulator is zero.

The phrase "lies in the middle" should be considered a little further. In general, the pulse shape is, as discussed in Section 3.1, the convolution of four things: the channel *power* impulse response $p(t)=h(t)h^*(t)$, the pre-filter *power* impulse response $h_{PRE}(t)h^*_{PRE}(t)$, a 'top-hat' pulse g(t) of duration $T_G$, and the product-filter (voltage) impulse response $h_{PROD}(t)$.

When the signal is being received by a single path, the pulse shape is thus, say:

$$u(t) = h_{PRE}(t) \, h_{PRE}^{*}(t) \otimes g(t) \otimes h_{PROD}(t)$$

The function $g(t)$ is symmetrical by definition, while there seems to be little reason to choose anything other than a similarly symmetrical 'top-hat' pre-filter. In this case the resulting pulse shape $u(t)$ is symmetrical or not depending on whether $h_{PROD}(t)$ is symmetrical.

If the product filter is a 'top-hat' filter (giving triangular pulses if it is $T_G$ wide, trapezoidal if it is shorter) then the pulses are symmetrical so the loop indeed settles with the square-wave transition in the middle of the pulse $u(t)$.

If the product filter takes any of the forms proposed in Section 2.3.1, the pulse shape is unaltered, so if this is used, either alone or in cascade with the 'top-hat' filters of the previous paragraph, the pulses remain symmetrical and the loop settles with the square-wave transition in the middle of the pulse.

The pulses will be non-symmetrical if the product filter averages nearby samples in a recursive fashion, or if it is a non-symmetrical form of FIR. With such non-symmetrical pulses the loop settles with the square-wave transition dividing the pulse $u(t)$ into two parts having equal area.

### 3 .4.2. Multipath reception in general

In multipath reception the pulse shape driving the PLL becomes:

$$v(t) \;=\; h(t) \, h^{*}(t) \otimes h_{PRE}(t) \, h_{PRE}^{*}(t) \otimes g(t) \otimes h_{PROD}(t)$$

$$=\; p(t) \otimes u(t)$$

and the loop will now settle so that the square-wave transition divides this pulse $v(t)$ into two parts having equal area.

The channel *power* impulse response $p(t)$ can be thought of as comprising a superposition of impulses corresponding to the various reception paths, with heights proportional to the power received via each path. Due to the linearity of the convolution integral, $v(t)$ will in turn comprise a superposition of pulses, each of shape $u(t)$, with heights proportional to the power received via each path.

The pulse $u(t)$ is at least $T_G$ wide - indeed if triangular pulses are used, they are $2T_G$, wide. Ideally, if the OFDM receiver is to perform well, p(t) will be no longer than $T_G$ . At least, it will need to be small everywhere outside some $T_G$-wide interval. It follows that in cases where the receiver could ever work anyway, the individual $u(t)$-shaped pulses contributing to $v(t)$ will overlap.

### 3.4.3. Multipath reception with rectangular pulses

It can be shown that the case of rectangular pulses $u(t)$ is reasonably amenable to analysis. Under certain more restrictive conditions a neat analogy with mechanical systems holds.

As has been noted, with a single path, giving rise to its corresponding rectangular pulse, the loop locks 'in the middle of' the pulse. By this is meant that the loop locks with the transition of the square wave in the middle of the pulse. If the path were spontaneously swapped for another of longer delay, the loop would lock correspondingly later, 'in the middle of' the (now later) pulse. Now, one may imagine that the representation of this in a timing diagram is interpreted instead as a picture of a mechanical system, with the time axis now corresponding to position in space. Take each individual path component in turn and place a mass on this position axis at the point corresponding to the middle of that path's pulse. Make each of these masses proportional to the corresponding value of the channel *power* impulse response (i.e. the strength of the path component). Now compute the position of the centroid (centre of gravity-CoG) of these masses. Note that this is, in effect, the centroid of the power impulse response $p(t)$ and not the centroid of the actual pulse $v(t)$ which feeds the loop.

Provided this centroidal position is overlapped by all the rectangular pulse contributions, it represents the position to which the loop will lock. This 'overlapping contribution' condition is not always satisfied, in which case this neat analogy breaks down, although the general nature of the behaviour is not greatly changed. With pulses of length $T_G$ the 'overlapping contribution' condition will always be satisfied if the extent of $p(t)$ is no more than $T_G/2$. Unfortunately, the OFDM system may be expected to behave properly (if appropriately synchronized) with the extent of $p(t)$ being all of $T_G$ so the simple analogy will indeed not always apply.

By time synchronization of an OFDM system is really meant the positioning of the $T_S$-long window for which the FFT of the signal is calculated in order to demodulate all the carriers. Fundamentally it should be a discrete Fourier transform (DFT), but in practice for economy it is always implemented as an FFT.

With a single path, the timing of this window has a tolerance equal to $T_G$ without the window ever spanning two symbol periods and thus suffering inter-symbol interference. Referring back to Figure 3, if the signal $Y$ is going to be demodulated, the range of possible positions for the end of the FFT window happens to correspond to the $T_G$-wide 'pulse' in XY*.

With multiple paths, each having its own $T_G$-wide tolerance, the range of acceptable window positions is reduced to the region within which all the $T_G$-wide pulses overlap. The range reduces to a single location when the spread of path delays equals the guard interval $T_G$ and there is no totally satisfactory position when the spread exceeds $T_G$, although a mathematical optimum can be defined.

If the FFT window is chosen to end at the point in time where the transition in the PLL square wave occurs, then it can be shown that the timing will be within the acceptable range of positions for any $p(t)$ whose extent is no more than $T_G/2$. It will also be correct for any symmetrical $p(t)$ whose extent is no more than $T_G$, including the two-path, 0 dB-echo case. Unfortunately it will not be satisfactory for the two-path case with delay more than $T_G/2$ but less than $T_G$, where the echo is less strong than the main-path signal but nevertheless big enough to cause ISI (inter-symbol interference).

If the pulse shape $u(t)$ is distorted from perfectly rectangular, being given sloping sides by virtue of introducing a pre-filter or a short FIR product filter, then the behaviour will remain similar in character as long as the sloping sides do not take over too much of the pulse.

### 3.4.4. Multipath reception with triangular pulses

The analysis for triangular pulses is more complicated, and the centroid analogy no longer holds. It appears to remain true, however, that the timing of the FFT window can still be derived so as to be within the acceptable range of positions for any $p(t)$ whose extent is no more than $T_G/2$. It will also work for the two-path, 0 dB-echo case with delays up to $T_G$. But the same limitations apply, namely that it will not be satisfactory for all possible p(t) whose extent is no more than $T_G$.

### 3.5. Frame Synchronization

Frame synchronization means locking up to a periodic structure at less than the symbol rate. Commonly, a frame contains a number of symbol periods, with some symbols being dedicated to specific jobs other than carrying normal data. A common use is for one symbol to carry known modulation that can be used for channel estimation (and perhaps for other methods of time-frequency synchronization). Other dedicated symbols may carry special system-related data. One special symbol, often provided to assist with frame synchronization (but having other roles as well) is a *null symbol:* one in which all/most/many of the carriers are turned off.

Conventionally a null symbol is detected pre-FFT to gain rough time synchronization so that the FFT results for other special symbols can be processed to complete frequency and time synchronization. Only coarse timing information can be derived from the null symbol alone.

In the present proposal, fine timing (symbol timing) is derived directly from the time-domain signal. So the location of symbols is accurately known, but not which is which. This is easy to resolve, since the magnitude of the smoothed pulse |$\overline{XY^*}$| is proportional to the symbol power, if the smoothing is only intra-symbol. The pulse will therefore be absent for the null symbol. This will not upset the operation of the types of PLL described, since this simply means that the control voltage will be neither increased nor decreased. Once symbol lock has been obtained, |$\overline{XY^*}$| can be sampled at the appropriate instant and a simple threshold applied to determine which symbol is the null symbol. This information can then be fed into a flywheel counter which divides the symbol rate down to frame rate.

Note that if inter-symbol smoothing is used, as per Section 2.3.1, then the null symbol may scarcely show in the smoothed signal and some secondary parallel-fed intra-symbol filtering may have to be used solely to find the null symbol.

### 3.6. Alternative Timing Strategies Using Non-linear Processing Of The Pulse

Section 3.4, particularly Section 3.4.3, described how the timing of the FFT window achieved by the proposed PLL is not ideal when the extent of the channel impulse response is greater than $T_G/2$.

### 3.6.1. Edge-triggered PLL

If such channels are to be dealt with, one satisfactory strategy is to lock to the first path of sufficient strength (where "sufficient" means great enough that it would cause a perceptible degree of ISI if it were not the main path), setting the FFT window as late as is permissible for that path, so that the window will also be in a satisfactory position for all paths arriving no more than T later. This is in effect what is done by the well-known approach of deriving the channel impulse response by transformation from the channel frequency response, as measured by a reference symbol, and noting the time at which it first exceeds a threshold.

Suppose a product filter of one of the forms described in Section 2.3.1 is used, so that the rectangular intrinsic pulse shape is retained. When receiving a multipath signal the input to the PLL now consists of many superposed rectangular pulses of different heights, as shown in Figure 8. The leading edge of the resulting pulse corresponds to the first path. If the magnitude of this waveform $|\overline{XY^*}|$ is taken and simply sliced at a threshold (corresponding to the path power below which insignificant ISI would be caused) a pulse is obtained whose width depends on the total extent of the channel impulse response. The pulse's leading edge will correspond to the timing of the first significant path and can be used to drive a PLL with an edge-triggered phase detector instead of the multiplicative type discussed so far. Such phase detectors are commonly used in frequency-synthesis PLLs and other 'gear-wheel' PLL applications.

This technique should work for all channels whose 'extent' is no greater than $T_G$. Provided the first path is a major one, it will also make the best it can of the unwelcome situation when the channel extent is longer still, as long as the last echo is not bigger than this first path.

The drawbacks are:

- the filtered waveform must be filtered enough that no noise spikes go above the threshold in the period between pulses, otherwise the edge-triggered PLL will be seriously confused

- a product filter is needed at all

- a product filter is needed with long delay elements (one or more times $T_T$)

It might be possible to avoid the long delay elements if sufficient filtering to meet the first constraint could be achieved with intra-symbol filtering (possibly recursive) which did not smear out the pulse too much. Note that steps would have to be taken to avoid the loop trying to slow down when a null symbol occurs - this is not a problem with the methods of Section 3.1 and Section 3.2, and would probably be acceptable with the edge-triggered technique with inter-symbol filtering since surrounding symbols would, to a degree, 'fill the gap'.

It might even be possible to do a similar operation with the triangular pulses resulting from the 'pseudo-matched' filter, but note that when the pulse has a severely sloping leading edge (as with triangles), the time that it crosses the threshold (relative to its centre) depends on its amplitude. Even in the absence of noise this would cause some variation in timing; with noise, significant timing jitter could be caused.

### 3.6.2. Multiplicative PLL with limiting

An idea which might obviate some of the potential snags of edge-triggering builds on the idea of thresholding just outlined.

From the foregoing, putting the inter-symbol-filtered and magnitude-detected signal through a limiter generates a pulse whose width depends on the total extent of the channel impulse response and whose leading edge will correspond to the timing of the first significant path. If this limited signal is fed to a multiplicative PLL (the arrangement of Figure 9, with a limiter inserted at the input to the PLL 44) the loop will lock to the middle of the pulse.

It can be seen that this will synchronize correctly for channels whose 'extent' does not exceed $T_G$, Since *all* the pulse, and not just the leading edge, contributes to the PLL action, it would appear that sensitivity to leading-edge jitter caused by noise will be much reduced. This method would also be to some degree tolerant of occasional spikes caused by noise exceeding the threshold.

With these advantages over edge triggering it might be possible to implement this method with *intra*-symbol filtering, although it would appear necessary to limit the length of the filter so that the slope of the sides of the pulse shape did not make the limited-pulse's width vary too much with amplitude of the delayed paths. Triangular pulses would not give the desired effect.

### 3.6.3. An Alternative

Another possibility is to change the waveform that the PLL (phase locked loop) uses to feed the second input to the multiplicative phase detector from the suggested 50:50 square wave to a more complex shape. The shape of the product-filter impulse response could also be forced to be non-symmetrical.

## 4. THE AFC CONTROL LOOP

### 4.1. Configuration With A Product Filter

Section 2 above explained how during the $T_G$-wide pulse the complex product signal XY* has the angle $-\omega T_S$ which is the fine-AFC error we wish to drive to zero by the action of the AFC loop. Since the signal XY* is itself of random nature, and thus sometimes small, the best way to determine the argument accurately is to calculate it from a smoothed version of XY*. This is most conveniently obtained by sampling the output of the product filter at an instant in the vicinity of the middle of the pulse - e.g. at the same time as the transition in the square wave of the sampling-frequency PLL.

Having obtained the AFC-error signal this is fed into an integrator whose output provides the control voltage for the receiver's local oscillator. Using an integrator ensures that the fine-AFC error can always track to zero.

Figure 11 shows how this arrangement can be combined with the previously-described sampling-frequency PLL scheme of Figure 9. The AFC error signal is derived by a circuit 70 which forms the phase angle of the signal. This is sampled in a sampler 72 once per symbol in response to the symbol-rate sampling pulse $f_s$ from the counter 48 in the PLL 44. The resultant is applied to an amplifier 74 which amplifies by $\alpha$ and the output is applied to an integrator 76 operating as an accumulator. The output of this is applied to a voltage controlled oscillator 78 the frequency of which varies with its input signal to provide the receiver local oscillator (LO) signal.

As in Figure 9, thick lines denote complex signals. The integrator 76 and preceding elements may most easily be implemented in digital form and the integrator's output converted to an analogue control signal. The latter could control the local oscillator (LO) directly as shown (for a fixed-channel receiver), or be used to pull the reference oscillator in the LO synthesiser of a channelised receiver. Another possibility would be to control the second LO in a dual-conversion receiver.

The gain factor alpha ($\alpha$) provides a way to tailor the dynamic response of the AFC loop.

### 4.2 Configuration Without A Product Filter

Section 3.2 described how an economical version of the sampling-frequency PLL could be made by omitting the product filter and letting the PLL do the entire filtering job as far as the sampling-frequency loop is concerned. An appropriate arrangement was shown in Figure 10. Unfortunately, omitting the product filter deprives one of a smoothed complex signal whose argument can be sampled for AFC.

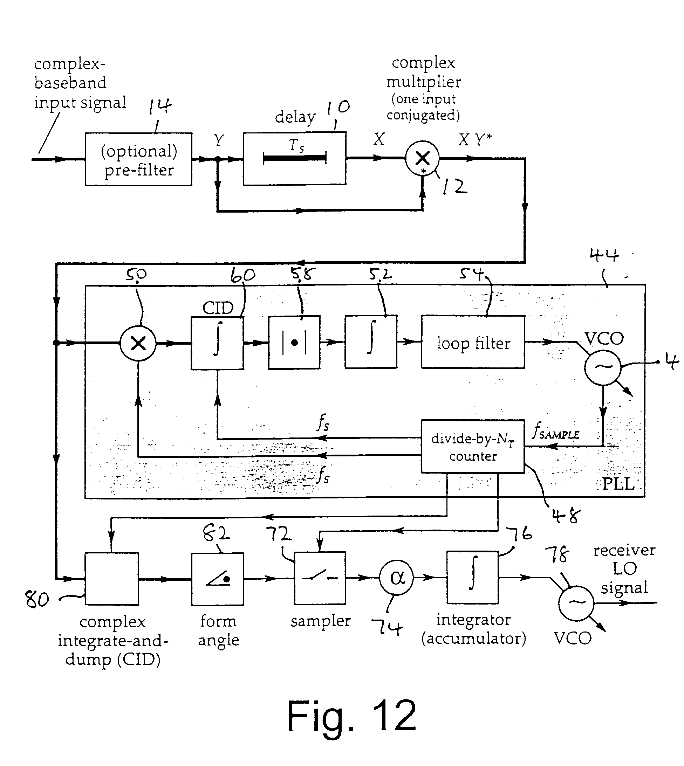

At first sight it would appear that a filter must be reinstated to do the job of extracting fine-AFC information. However, if it is noted that a continuous filtered signal is not in fact needed, but merely a sample of it once per symbol, an equivalent solution which preserves the essential economy of Figure 10 can be devised and is shown in Figure 12. A complex integrate-and-dump circuit 80 (simply a real adder and two delay elements, if a stream of interleaved samples of real and imaginary parts is processed) takes the place of the filter and sampler. The integrate-and-dump performs the equivalent operation of a 'top-hat' filter followed by a sampler. The width of the 'top-hat' equals the duration over which the integrate-and-dump is permitted to operate, and might reasonably be set to be $T_G$, symmetrically disposed about the transition in the 50:50 square wave of the sampling-frequency PLL. Note that nearly $T_G$'s-worth of storage elements have been saved, compared with using a filter to do the same job.

A product filter may be placed at the input to the CID circuit 80.

The output of the circuit 80 is applied to an angle-forming circuit 83, the output of which is in turn applied to a sampler 72, an amplifier 74, an integrator 76, and a VCO 78, as in Figure 11. In this case, the CID circuit 80 and the samplers 72 receive timing feeds from the counter 48 directly.

The sampler 72 shown in Figure 12 is not strictly necessary. Using it, the main integrator of the AFC loop would be updated once per symbol, just as in the original version of AFC presented in Figure 11. Without it, one would have to arrange that the output Of the integrate-and-dump circuit 80 is held on completion of its integration, until being reset just before its next $T_G$-wide integration period. In this case, the output of the main integrator will change smoothly throughout most of the symbol period, rather than making a step change once per symbol period. A smaller value of alpha ($\alpha$) would be needed. This smooth variation might offer some advantages in terms of jitter spectra.

### 4.3 Dealing With Coarse Frequency Offset

Section 2.3 explained how using the AFC arrangements of Figures 11 and 12 can only lock the frequency offset to the nearest integer number of carrier spacings $f_s$. The subsequent demodulation of the signal using the FFT will therefore have an uncertainty as to which carrier's output appears on which FFT outlet. Once this uncertainty is determined in some way, it could be corrected for by simply offsetting the timing of control signals which determine how the post-FFT signal is processed (given that the FFT output is in practice a serial stream of samples corresponding to successive carriers, or possibly to the carriers presented in some other order, depending on the particular FFT implementation). This simple method can be used provided the coarse AFC error it is correcting is small compared with the signal passband.

Various methods can be used to determine the coarse AFC offset.

Where a reference symbol containing CAZAC or m-sequences is present (these being known in OFDM technology), a very simplified version of the frequency-domain correlation normally used will suffice. It is merely necessary to determine the integer position having the greatest correlation, there being no need to solve an equation to determine the fine AFC error - in consequence, no great accuracy is needed.

Alternatively, one could search for the occurrence of some other feature known to occur on only some carrier positions (for example, continual pilots, if present). If the likely coarse AFC error amounts to only a few carrier spacings then a hunt-and-try technique could perhaps be used to determine the position in which the error correction process is least busy.

### 4.4. Interactions Of The Two Loops

AFC offset does not significantly disturb the measurement of the symbol timing, but approximate symbol timing is needed for the samples of the AFC signal to be taken during the part of the symbol where it is available.

On the other hand, if the digital method of I-Q generation is used, the sampling frequency also contributes to the AFC offset error. Thus any swing in the sampling frequency will affect the AFC loop. Thus there is scope for loop interaction. It may therefore be wise to keep their loop control bandwidths somewhat apart to reduce unwanted joint oscillation modes.

Probably the sampling-frequency (timing) loop should for most applications be the slower - it depends whether channel equalisation is used, since changing the timing changes the phase of the required equalisation. For DAB, and similar differential schemes, equalisation is not needed and thus more rapid timing adjustment may be permissible - and with mobile applications, desirable. Compared with other methods, where the timing can only be measured once per frame, a faster tracking of timing is possible, especially where a product filter is used in the sampling- frequency loop so that the PLL has little filtering to do.

### 5. BRIEF COMPARISON WITH OTHER METHODS

The apparent advantages of the new proposed method are:

- all synchronization, excluding coarse AFC, namely symbol timing, sampling frequency synchronization and local-oscillator AFC can be derived from essentially one measurement which is performed directly upon the receiver's input signal without waiting for the FFT process;

- this synchronization is derived at symbol rate (albeit with the need to filter the result) rather than only once per frame (i.e. once per say 100 symbols);

- the synchronization is expected to be very rugged against the effects of thermal noise.

Conventional approaches derive all synchronization from once-per-frame reference symbols. A 'null' symbol is used to obtain frame and symbol timing directly but only approximately from the input signal. The FFT output during another reference symbol (called the Phase Reference Symbol in DAB, CAZAC/M symbol in the (QAM-based) Draft DVB-T Specification) is then used to provide the rest. (This reference symbol is also used for measurements of the channel frequency response)

A correlation technique applied to the differentially-modulated elements of the reference signal produces a 'pulse' (in effect in the frequency domain) whose *position* indicates both the coarse and fine AFC error. It is less well known that the *argument* of this pulse gives an indication of the symbol-timing error. It can also be shown that when this method is used, the timing obtained tends towards the centroid of the channel's power impulse response, i.e. it performs somewhat similarly to one version of the new method (see Section 3.4.3).

Timing information is however more commonly obtained by performing a further transform on the 'channel frequency response' obtained from the reference symbol to give the impulse response. The first pulse in this response whose value exceeds a chosen threshold is then taken as corresponding to the 'main' path and the timing adjusted accordingly. This method requires the extra FFT operation. It may be susceptible to noise or fluctuation in the strength of the first path when it is weak compared with a later main one.

## 6. ADDITIONAL PROPOSALS CONCERNING AFC (Automatic Frequency Control)

6.1 Simplified angle extraction

Figures 11 and 12 show two slightly different ways of forming a complex signal from which angle information is then derived. This angle is the argument of the complex number and, as shown in Section 2 the angle is proportional to the fine AFC error $\omega_O$. The differences between the two Figures relate to the way in which the complex signal is smoothed before being, in effect, sampled once per symbol.

The "form angle" circuits 70 and 82 in Figures 11 and 12 thus perform (one half of) the standard Cartesian-to-Polar conversion process. Essentially this involves an arctan process, modified to take account of the signs of both the real and imaginary parts of the input complex number so as to resolve all four quadrants of the angle. The smoothed complex number is proportional to $\sigma_X^2 e^{j\omega_0 T_S}$. The argument is the angle $-\omega_0 T_S$, which is proportional to the AFC error. The form angle circuits thus detect the argument of the signal in the pulses.

This method is preferred where feasible. It has the advantage that it should be independent of the signal level and relatively untroubled by 'self noise'.

However, a significant reduction in complexity is possible. Instead of forming the argument of the complex number one may simply take its imaginary, part, namely $-\sigma_X^2 \sin\omega_0 T_S$. This still has satisfactory properties for controlling an AFC loop. When $\omega_O$ is small, the control signal is approximately proportional to $\omega_0$; when it is not, the control is nevertheless of the appropriate sign to ensure relevant loop behaviour and lock-up. A potential disadvantage is that $\sigma_X^2$ appears as a factor, so the loop gain is now dependent on the signal level. Furthermore, the factor is strictly only $\sigma_X^2$ under certain conditions, e.g. if there is infinite smoothing of the original complex number. Smoothing is finite in practice, so the factor becomes itself a random variable from symbol to symbol. However, the sign of this factor is always positive, so in this case 'self-noise' causes no real problems, and in any case reduces in effect as correct lock is approached.

When this simplification is followed, it will be seen that since only the imaginary part of the complex number is used there is no need to form its real part. For example, in the case of the implementation of Figure 12 the "complex-integrate-and-dump" therefore need only be a real-integrate-and-dump operating on the imaginary part only of the output of the complex multiplier. If only AFC and not time-sync is to be derived then the complex multiplier itself may in turn be simplified to provide only the imaginary part of XY*.

6.2 Period of integrate-and-dump

The discussion of Section 4.2 suggests that the duration of the integrate-and-dump might be $T_G$ and this is indeed a sensible choice. However, the method is not limited to this. For example, where a system has to work with a range of possible $T_G$ values (as for current DVB-T proposals) it might be conveniently simple to use a single fixed value. Secondly, the system as described rather assumes that timing sync has already been obtained. Where this requirement is inconvenient it should be possible to integrate over the entire signal (i.e. not gating out the noise-like part of the waveform between 'pulses') and still derive AFC control. Such an arrangement is somewhat affected by 'self-noise', but there are circumstances where it is adequate. The two ideas could be combined, using all the signal initially, then gating out the unwanted part of the signal once timing sync has been obtained. This might be particularly relevant if a different method of obtaining timing sync were used in conjunction with the proposed method for AFC.

6.3 A Further Proposal concerning AFC

Section 6.2 above describes how the period of the integrate-and-dump function can in fact take any value and still provide a working system. The best noise performance (with respect to both thermal and 'self' noise) is obtained with an integrate-and-dump period of length $T_G$ aligned with the 'pulse'. This requires timing synchronization to have been achieved, otherwise no AFC signal is available. In the presence of multipath interference, a slightly longer period might be desirable, while if AFC lock is desired to take place before timing synchronization has been achieved, then it is necessary to integrate over the whole symbol period, at the price of a (usually acceptable) penalty in noise performance.

A further small modification is desirable if continuous-wave (CW) interference is likely to be present. We have appreciated thatsince such a CW signal will add a constant complex component to the signal XY*, the interference can be removed by removing any constant complex component of the XY* signal. The phase of this complex component in effect represents the AFC signal required to lock the OFDM receiver to the CW interfering signal instead of the desired OFDM signal. When the interfering signal has power comparable to or exceeding that of the OFDM signal it could 'capture' the AFC process so that the OFDM receiver locks to it instead of to the OFDM signal.

This undesirable state of affairs may be avoided by means of a simple modification. The XY* signal is fed to the AFC integrate-and-dump 80 via a circuit which can multiply by plus or minus unity. The integrate-and-dump integrates with positive sense for some period $T_+$. This period would be chosen to be disposed around the 'pulse' in XY* as previously described. For a further period totalling $T_-$ (arranged to lie within the period of zero-mean noise between 'pulses') the circuit integrates with negative sense. Provided $T_+$ is made equal in duration to $T_-$ the effect of any continuous wave interferer is cancelled out, and the AFC loop will correctly lock to the wanted OFDM signal.

A simple example would make $T_+$ and $T_-$ both equal to one-half the total symbol period $T_T$. In this case the noise susceptibility would be the same as for the system previously mentioned in which integration takes place over the whole period. The resistance of CW interference is obtained at the price of requiring at least approximate timing lock to be achieved first.

The signal driving the AFC integrate-and-dump could be multiplied by different plus and minus values provided the proportions of $T_+$ and $T_-$ were correspondingly adjusted to ensure that the contribution from the CW interferer is still exactly cancelled.

That is, successive portions of the signal as applied to the integrate-and-dump circuit 80 are integrated in alternating positive and negative sense.

Other methods can be used to cancel the unwanted complex constant which is introduced into the XY* signal in the presence of CW interference. For example, it can be extracted by low-pass filtering the XY* signal, thereby deriving the complex mean, which is then subtracted from the XY* signal.

In passing it will be noted that the nature of the control loops used to obtain timing synchronization already possesses this property of interference cancellation by in effect multiplying by a waveform with equal mark:space ratio. This is facilitated by the use of a full (four-component) complex multiplier as the multiplier 12.

## 6.4 Open-loop AFC

All the AFC systems described above are 'closed loop'. A signal is derived which gives the AFC error $\omega_O$ which is then fed into a control loop with the appropriate sign so as to reduce the error. Due to the presence of the integrator/accumulator 76 in the systems of Figures 11 and 12, the error will always track to zero eventually, provided the incoming signal frequency remains steady.

An alternative which might be useful in some applications is open-loop control. This is possible because the measurement of AFC error $\omega_O$ using the "form angle" circuit 70 does not have any unknown scaling factor; $\omega_O$ is thus accurately determined. This means that in principle the $\omega_O$ measurement can be used directly to control another oscillator to correct the error. This requires an oscillator with a precisely-determined, linear control-signal to frequency characteristic. This could not readily be achieved using analogue techniques, but it is easy using the now well-known direct digital frequency synthesis. In the present application, the AFC error ($\omega_O$) during one symbol of the signal could be determined, then the signal (fed through an appropriate balancing delay) shifted by precisely $\omega_O$ using a digital oscillator before passing on to the FFT and later stages of the receiver.

Such an arrangement would be able to track variations in the incoming frequency much more rapidly (on a symbol-by-symbol basis) than would be possible with closed-loop control, at the expense of greater susceptibility to thermal noise. This might be beneficial in some applications, for example in vehicles.

## 7. SUMMARY

The basis of a new synchronization method for OFDM has been described. It exploits the presence of the guard interval using a correlation-type technique. It enables both local-oscillator AFC and symbol timing/sampling-frequency control signals to be derived simultaneously and independently at symbol rate. Furthermore, these control signals are extracted directly from the received complex-baseband signal before FFT processing takes place. The method does not require any special symbols to be inserted in the signal and is expected to be rugged against thermal noise.

Note that the technique provides fine AFC only. Coarse AFC is not provided, so, after AFC lock is achieved, the local oscillator (LO) frequency may be in error by an integer number of carrier spacings. This would have the effect that the signals conveyed by the various OFDM carriers would appear at the wrong outputs of the FFT in a receiver. This could easily be corrected provided some method of detecting it were available. Possibilities include making use of 'hunt-and-try' techniques while monitoring bit-error ratio, or looking for continual pilot carriers.

Since the method does not require access to the output of the FFT normally used in an OFDM receiver, it would also be useful for any applications where an OFDM signal is handled (and synchronization is needed) but decoding of the signal, involving the FFT process, is not otherwise required.

## Claims

1. A method of extracting information from a signal which comprises a succession of symbol periods $T_T$ each consisting of an active symbol period $T_S$ and a guard interval $T_G$, the method comprising the steps of:

receiving an input signal Y (or X);

providing a signal X (or Y) delayed by a time period equal to the active symbol period $T_S$ ;

forming a signal related to the complex product XY* of the input and delayed signals to provide a succession of pulses, one for each symbol period; and

detecting the argument of the signal in the pulses.

2. A method according to claim 1, including, after the forming step, filtering the complex product signal with a filter based on filter elements having a delay equal to the total symbol period $T_T$.

3. A method according to claim 2, including the step of controlling the frequency of a local oscillator in dependence upon the filtered complex product signal.

4. A method according to claim 1, in which the complex product signal is formed as $X_Q Y^* + X Y_Q^*$, where $X_Q, Y_Q$ have the possible values 1+j, 1-j, -1+j, -1-j, and are formed by replacing each Cartesian component of X and Y, by its sign multiplied by unity.

5. A method according to claim 1, in which the step of detecting the arguments comprises detecting the sense of the phase deviation from zero.

6. A method according to claim 5, including the step of controlling the frequency of a local oscillator in dependence upon the detected argument of the signal in the pulses.

7. A method according to claim 1, including the step of controlling the symbol timing in dependence on the complex product signal.

8. A method according to claim 1, including the step of integrating the signal, with sucessive portions of the signal being integrated in alternating positive and negative sense.

9. A method of extracting information from a signal which comprises a succession of symbol periods $T_T$ each consisting of an active symbol period $T_S$ and a guard interval $T_G$, the method comprising the steps of:

receiving an input signal Y (or X);

providing a signal X (or Y) delayed by a time period equal to the active symbol period $T_S$ ;

forming a signal related to the complex product XY* of the input and delayed signals to provide a succession of pulses, one for each symbol period; and

filtering the complex product signal with a filter based on filter elements having a delay equal to the total symbol period $T_T$.

10. A method according to claim 9, including the step of controlling the frequency of a local oscillator in dependence upon the filtered complex product signal.

11. A method according to claim 10, including the step of controlling a local oscillator in dependence upon the detected argument of the signal in the pulses.

12. A method according to claim 9, including the step of controlling the symbol timing in dependence on the complex product signal.

13. A method of extracting information from a signal which comprises a succession of symbol periods $T_T$ each consisting of an active symbol period $T_S$ and a guard interval $T_G$, the method comprising the steps of:

receiving an input signal Y (or X);

providing a signal X (or Y) delayed by a time period equal to the active symbol period $T_S$ ;

forming a signal related to the complex product XY* of the input and delayed signals to provide a succession of pulses, one for each symbol period; and

substantially removing any constant complex component of the XY* signal.

14. A method according to claim 13, in which the step of removing any constant complex component comprises integrating the signal, with sucessive portions of the signal being integrated in alternating positive and negative sense.

**15.** A method according to claim 13, in which the step of removing any constant complex component comprises low-pass filtering the XY* signal to extract the mean and subtracting it from the signal.

**16.** A method according to claim 13, in which the complex product is formed by a full four-component multiplier.

**17.** A method of extracting information from a signal which comprises a succession of symbol periods $T_T$ each consisting of an active symbol period $T_S$ and a guard interval $T_G$, the method comprising the steps of:

receiving an input signal Y (or X);
providing a signal X (or Y) delayed by a time period equal to the active symbol period $T_S$ ; and
forming a signal related to the complex product XY* of the input and delayed signals to provide a succession of pulses, one for each symbol period, the complex product signal being formed as $X_Q Y^* + X Y_Q^*$, where $X_Q$, $Y_Q$ have the possible values 1+j, 1-j, -1+j, -1-j, and are formed by replacing each Cartesian component of X and Y, by its sign multiplied by unity.

**18.** A method of extracting information from a signal which comprises a succession of symbol periods $T_T$ each consisting of an active symbol period $T_S$ and a guard interval $T_G$, the method comprising the steps of:

receiving an input signal Y (or X);
providing a signal X (or Y) delayed by a time period equal to the active symbol period $T_S$ ; and
forming a complex product signal XY* from the input and delayed signals to provide a succession of pulses, one for each symbol period, the complex product being formed by a full four-component multiplier.

**19.** Apparatus for extracting information from a signal which comprises a succession of symbol periods $T_T$ each consisting of an active symbol period $T_S$ and a guard interval $T_G$, the apparatus comprising:

means for receiving an input signal Y (or X);
means for providing a signal X (or Y) delayed by a time period equal to the active symbol period $T_S$ ;
means for forming a signal related to the complex product XY* of the input and delayed signals to provide a succession of pulses, one for each symbol period; and
means for detecting the argument of the signal in the pulses.

**20.** Apparatus according to claim 19, including, after the means for forming, means for filtering the complex product signal with a filter based on filter elements having a delay equal to the total symbol period $T_T$.

**21.** Apparatus according to claim 20, including means for controlling the frequency of a local oscillator in dependence upon the filtered complex product signal.

**22.** Apparatus according to claim 19, in which the complex product signal is formed as $X_Q Y^* + X Y_Q^*$, where $X_Q, Y_Q$ have the possible values 1+j, 1-j, -1+j, -1-j, and are formed by replacing each Cartesian component of X and Y, by its sign multiplied by unity.

**23.** Apparatus according to claim 19, in which the means for detecting the arguments comprises means for detecting the sense of the phase deviation from zero.

**24.** Apparatus according to claim 23, including means for controlling a local oscillator in dependence upon the detected argument of the signal in the pulses.

**25.** Apparatus according to claim 19, including means for controlling the symbol timing in dependence on the complex product signal.

**26.** A method according to claim 19, including means for integrating the signal, with sucessive portions of the signal being integrated in alternating positive and negative sense.

**27.** Apparatus for extracting information from a signal which comprises a succession of symbol periods $T_T$ each consisting of an active symbol period $T_S$ and a guard interval $T_G$, the apparatus comprising:

means for receiving an input signal Y (or X);

means for providing a signal X (or Y) delayed by a time period equal to the active symbol period $T_S$ ;

means for forming a signal related to the complex product XY* of the input and delayed signals to provide a succession of pulses, one for each symbol period; and

means for filtering the complex product signal with a filter based on filter elements having a delay equal to the total symbol period $T_T$.

28. Apparatus according to claim 27, including means for controlling the frequency of a local oscillator in dependence upon the filtered complex product signal.

29. Apparatus according to claim 28, including means for controlling a local oscillator in dependence upon the detected argument of the signal in the pulses.

30. Apparatus according to claim 27, including means for controlling the symbol timing in dependence on the complex product signal.

31. Apparatus for extracting information from a signal which comprises a succession of symbol periods $T_T$ each consisting of an active symbol period $T_S$ and a guard interval $T_G$, the apparatus comprising:

means for receiving an input signal Y (or X) ;

means for providing a signal X (or Y) delayed by a time period equal to the active symbol period $T_S$ ;

means for forming a signal related to the complex product XY* of the input and delayed signals to provide a succession of pulses, one for each symbol period; and

means for substantially removing any constant complex component of the XY* signal.

32. Apparatus according to claim 31, in which the means for removing any constant complex component comprises means for integrating the signal, with sucessive portions of the signal being integrated in alternating positive and negative sense.

33. Apparatus according to claim 31, in which the means for removing any constant complex component comprises means for low-pass filtering the XY* signal to extract the mean and subtracting it from the signal.

34. Apparatus according to claim 31, in which the complex product is formed by a full four-component multiplier.

35. Apparatus for extracting information from a signal which comprises a succession of symbol periods $T_T$ each consisting of an active symbol period $T_S$ and a guard interval $T_G$, the apparatus comprising:

means for receiving an input signal Y (or X);

means for providing a signal X (or Y) delayed by a time period equal to the active symbol period $T_S$ ; and

means for forming a signal related to the complex product XY* of the input and delayed signals to provide a succession of pulses, one for each symbol period, the complex product signal being formed as $X_Q Y^* + X Y_Q^*$, where $X_Q, Y_Q$ have the possible values 1+j, 1-j, -1+j, -1-j, and are formed by replacing each Cartesian component of X and Y, by its sign multiplied by unity.

36. Apparatus for extracting information from a signal which comprises a succession of symbol periods $T_T$ each consisting of an active symbol period $T_S$ and a guard interval $T_G$, the apparatus comprising:

means for receiving an input signal Y (or X) ;

means for providing a signal X (or Y) delayed by a time period equal to the active symbol period $T_S$ ;

means for forming a signal related to the complex product XY* of the input and delayed signals to provide a succession of pulses, one for each symbol period; and

means for forming a complex product signal XY* from the input and delayed signals to provide a succession of pulses, one for each symbol period, the complex product being formed by a full four-component multiplier.

Fig. 1

Fig. 2

Fig. 3

Fig. 4

Fig. 5

Fig. 6

# Fig. 7

# Fig. 10

Fig. 8

complex-
baseband
input signal    14

complex
multiplier
(one input
conjugated)    42

delay   10

Y

$T_S$

X

$X Y^*$

(optional)
pre-filter

product
filter

12

form
magnitude

50    52    54

$|\bullet|$   58

$\int$

loop filter

VCO

46

$f_s$

divide-by-$N_T$
counter

$f_{SAMPLE}$

PLL

40

48    44

# Fig. 9

Fig. 11

complex-
baseband
input signal  14

delay  10

complex
multiplier
(one input
conjugated)

Y

$T_S$

X

$XY^*$

(optional)
pre-filter

12

44

50        60      58      52      54

CID

$\int$        $|\cdot|$      $\int$      loop filter

VCO

$\sim$

4

$f_S$

divide-by-$N_T$
counter

$f_{SAMPLE}$

$f_S$

PLL

48

82      72          76      78

receiver
LO
signal

80

complex
integrate-and-
dump (CID)

form
angle

sampler

74

$\alpha$

integrator
(accumulator)

VCO

$\sim$

# Fig. 12